# EUROPÄISCHE PATENTSCHRIFT

(11) **EP 3 268 635 B1**
(45) Veröffentlichungstag und Bekanntmachung des Hinweises auf die Patenterteilung: **11.11.2020**
(21) Anmeldenummer: 16712227.4
(22) Anmeldetag: 04.03.2016
(51) Int. Cl.: F16H 57/08, F16H 57/01, G08C 17/02

(54) **PLANETENGETRIEBE**
PLANETARY GEAR UNIT
TRAIN ÉPICYCLOÏDAL

(30) Priorität: 17.04.2015 EP 15164055
(43) Veröffentlichungstag der Anmeldung: 17.01.2018
(73) Patentinhaber: Flender GmbH, 46395 Bocholt (DE)
(72) Erfinder: MEYER, Thomas, 52223 Stolberg (DE); REIMERS, Jan-Dirk, 52074 Aachen (DE)
(74) Vertreter: Maier, Daniel Oliver
(86) Internationale Anmeldenummer: PCT/EP2016/054630
(87) Internationale Veröffentlichungsnummer: WO 2016/165873

(56) Entgegenhaltungen:
- EP-A1- 2 498 076
- WO-A1-2007/085259
- WO-A1-2009/003016
- WO-A1-2011/104433
- DE-A1-102011 085 299
- DE-B3-102011 112 365
- JP-A- 2006 138 873

## Beschreibung

Die vorliegende Erfindung betrifft ein Planetengetriebe mit einem Gehäuse und zumindest einer Planetenstufe, die zumindest ein Sonnenrad, das an einer drehbar am Gehäuse gelagerten Sonnenradwelle vorgesehen ist, zumindest einen drehbar an dem Gehäuse gelagerten Planetenradträger, zumindest zwei an dem Planetenradträger befestigte Planetenradbolzen, an denen jeweils ein Planetenrad drehbar gehalten ist, und zumindest ein drehfest innerhalb des Gehäuses befestigtes und eine Innenverzahnung aufweisendes Hohlrad umfasst, mit dem die Planetenräder in Eingriff sind.

Derartige Planetengetriebe sind im Stand der Technik in unterschiedlichsten Ausgestaltungen bekannt. Für die Identifizierung von Schäden an solchen Planetengetrieben werden normalerweise Zustandsüberwachungssysteme eingesetzt, die Betriebsdaten unter Verwendung unterschiedlichster Sensoren erfassen und sowohl eine Zustandsdiagnose als auch im weiteren Rahmen eine Aussage zur Restlebensdauer von Bauteilen oder Bauteilgruppen ermöglichen. Bei den erfassten Betriebsdaten kann es sich beispielsweise um Temperaturen der Lager, des Öls in den Zulauf- und Ablaufleitungen und des Öls im Getriebesumpf, um Schwingungswerte von Komponenten in verschiedenen Raumachsen, um akustische Emissionen im Kilohertzbereich, um Partikelgrößen und/oder Partikelgrößenverteilungen in Ölströmen, um Drehzahlen einzelner Komponenten, um Verformungen und/oder Verlagerungen von Bauteilen, um auf Komponenten wirkende Drehmomente und/oder Kräfte, um Drehschwingungen oder dergleichen handeln, um nur einige Beispiele zu nennen. Die von den Sensoren erfassten Messgrößen werden normalerweise in einem Datenerfassungsrechner gesammelt, woraufhin eine Auswertung entweder gegen eine Trendüberwachung des gleitenden Mittelwertes oder gegen voreingestellte Referenzwerte erfolgt.

Ein grundsätzliches Problem bei der Zustandsüberwachung von Planetengetrieben besteht darin, dass Betriebsdaten in erster Linie unter Einsatz ortsfester Sensoren problemlos und bei geringem Kostenaufwand erfasst werden können. Eine messtechnische Applikation von Sensoren an rotierenden Maschinenteilen ist hingegen sehr kostenintensiv. Es werden hierzu teure Funkübertragungssysteme benötigt, die sowohl die Daten als auch die Energie für die Sensoren übertragen müssen, wozu am rotierenden Bauteil in vielen Fällen gesonderte Verstärker oder Signalvorbearbeitungssysteme anzuordnen sind. Zudem werden die zu identifizierenden Schäden von einer Vielzahl von Faktoren beeinflusst, weshalb die Anzahl der am rotierenden Bauteil vorzusehenden Sensoren entsprechend hoch ist, um die verschiedenen Betriebsdaten erfassen zu können. Vor diesem Hintergrund werden messtechnische Applikationen an rotierenden Maschinenteilen derzeit nach Möglichkeit vermieden.

Aus der Druckschrift WO 2011/104433 A1 ist ein mehrstufiges Planetengetriebe bekannt, das in den jeweiligen Planetenstufen über ein Sonnenrad und eine Mehrzahl an Planetenrädern verfügt. Die Planetenräder sind drehbar an einem Planetenträger aufgenommen. Das Planetengetriebe verfügt über eine Mehrzahl an Sensoren, die als Piezosensoren oder MEMS ausgebildet sein können. Die sind als Schrauben in Radialrichtung am Planetenträger oder stirnseitig an einer Planetenradachse angebracht. Die Sensoren sind ferner dazu ausgebildet, über Antennen Energie und Daten zu empfangen bzw. auszutauschen. Die Antennen wiederum sind mit Basisstationen verbunden.

Ausgehend von diesem Stand der Technik ist es eine Aufgabe der vorliegenden Erfindung, ein alternatives Planetengetriebe der eingangs genannten Art zu schaffen, das eine einfache und preiswerte Erfassung von Betriebsdaten ermöglicht.

Zur Lösung dieser Aufgabe schafft die vorliegende Erfindung ein Planetengetriebe der eingangs genannten Art, das dadurch gekennzeichnet ist, dass ein FOFW-System (Funkabfragbares Oberflächenwellensensor-System) vorgesehen ist, das eine Abfrageeinheit, zumindest eine elektrisch mit der Abfrageeinheit verbundene und innerhalb des Gehäuses angeordnete ortsfeste Antenne, zumindest zwei an den Planetenradbolzen befestigte FOFW-Sensoren (Funktabfragbare Oberflächenwellensensoren) und zumindest eine der Anzahl von Planetenradbolzen entsprechende Anzahl von an dem Planetenradträger befestigten mitdrehenden Antennen aufweist, die jeweils mit zumindest einem der FOFW-Sensoren elektrisch verbunden und derart angeordnet und ausgebildet sind, dass sie von den FOFW-Sensoren erfasste Messdaten an die zumindest eine ortsfeste Antenne übertragen. Erfindungsgemäß sind die FOFW-Sensoren jeweils zwischen Wangen des Planetenträgers an den Planetenradbolzen befestigt. Ein wesentlicher Vorteil, der mit dem erfindungsgemäßen Einsatz eines FOFW-Systems einhergeht, besteht darin, dass FOFW-Sensoren keine gesonderte Energiequelle benötigen, weshalb sie ohne zusätzliche Komponenten an den am rotierenden Planetenradträger gehaltenen Planetenradbolzen angeordnet werden können, die nur wenig Bauraum zur Verfügung stellen. Ferner weisen sie einen sehr einfachen Aufbau auf, weshalb sie normalerweise preiswert und wartungsfrei sind. Zudem halten sie hohen thermischen und elektromagnetischen Beanspruchungen stand, so dass sie auch bei hoch beanspruchten Planetengetrieben problemlos einsetzbar sind. Darüber hinaus sind sowohl die FOFW-Sensoren als auch die Antennen meist ohne große Probleme nachrüstbar, so dass sich das erfindungsgemäße FOFW-System auch bei bereits bestehenden Planetengetrieben nachträglich implementieren lässt. Ein weiterer Vorteil, der mit der Verwendung von FOFW-Sensoren einhergeht, besteht darin, dass sich mit einem FOFW-Sensor mehrere Betriebsdaten gleichzeitig erfassen lassen, weshalb auf eine Anordnung unterschiedlicher Sensoren verzichtet werden kann. Insgesamt wird Dank des erfindungsgemäßen FOFW-Systems eine einfache und preiswerte Erfassung der relevanten Planetenradbetriebsdaten ermöglicht.

Gemäß einer Ausgestaltung der vorliegenden Erfindung ist das FOFW-Systems derart ausgelegt und die FOFW-Sensoren sind derart an den zugeordneten Planetenradbolzen angeordnet, dass während des bestimmungsgemäßen Betriebs des Planetengetriebes zumindest eine auf den zugeordneten Planetenradbolzen einwirkende Kraftkomponente und/oder eine im Bereich des FOFW-Sensors hervorgerufene Dehnung des Planetenradbolzens und/oder eine im Bereich des FOFW-Sensors vorherrschende Temperatur und/oder eine Biegung des Planetenradbolzens im Bereich des FOFW-Sensors und/oder eine Drehzahl des Planetenradträgers erfasst wird/werden. Somit lassen sich beispielsweise auf die Planetenräder einwirkende Kräfte und Momente temperatur- und/oder drehzahlabhängig ermitteln.

Bevorzugt sind die FOFW-Sensoren innerhalb einer an dem Planetenradbolzen vorgesehen Aussparung positioniert und werden von einem an dem Planetenradbolzen vorgesehenen Lager bedeckt, welches das Planetenrad aufnimmt. Bei einer solchen Anordnung sind die FOFW-Sensoren vor äußeren Einflüssen geschützt. Darüber hinaus lassen sich mit den FOFW-Sensoren nicht nur die Planetenradbolzen betreffende Betriebsdaten sondern auch die Lager betreffende Betriebsdaten erfassen, wie beispielsweise die Temperatur der Lager, die einen wesentlichen Indikator für das Betriebs- und Verschleißverhalten eines Lagers darstellt.

Vorteilhaft sind entlang der Längserstreckung jedes Planetenradbolzens mehrere FOFW-Sensoren befestigt, die mit einer gemeinsamen mitdrehenden Antenne elektrisch verbunden sind. Damit lassen sich Verformungen bzw. Schiefstellungen der Planetenradbolzen erfassen, die einen erheblichen Einfluss auf das Tragverhalten einer Planetenradstufe haben.

Gemäß einer Ausgestaltung der vorliegenden Erfindung weisen die von den einzelnen FOFW-Sensoren ausgesendeten Signale jeweils eine eindeutige Frequenzsignatur auf, um die von den einzelnen Sensoren erfassten Signale voneinander zu unterscheiden. Eine solche Frequenzsignatur kann den FOFW-Sensoren eigen sein. Sie kann aber auch bewusst nachträglich implementiert werden. Normalerweise reichen hier bereits wenige Megahertz Frequenzunterschied, um die von den einzelnen FOFW-Sensoren erfassten und übermittelten Betriebsdaten voneinander unterscheiden zu können.

Gemäß einer ersten Variante der vorliegenden Erfindung ist die zumindest eine ortsfeste Antenne derart ausgebildet und angeordnet, dass die mitdrehenden Antennen während einer Drehbewegung des Planetenradträgers nacheinander in und aus dem Empfangsbereich der zumindest einen ortsfesten Antenne bewegt werden. Dies führt dazu, dass die von den an den jeweiligen Planetenradbolzen vorgesehen FOFW-Sensoren erfassten Betriebsdaten sequenziell und damit bezogen auf den entsprechenden Planetenradbolzen über die zugeordnete mitdrehende Antenne an die ortsfeste Antenne übermittelt werden. Auch lässt sich über den zeitlichen Abstand, der zwischen aufeinander folgenden Datenübertragungen liegt, die Drehzahl des Planetenradträgers ermitteln, ohne dass hierfür ein zusätzlicher Sensor erforderlich ist.

Vorteilhaft ist der Sende- und Empfangsbereich der ortsfesten und mitdrehenden Antennen geringer ist als der kürzeste Abstand zwischen den mitdrehenden Antennen. Auf diese Weise wird sichergestellt, dass FOFW-Sensoren, die an verschiedenen Planetenradbolzen angeordnet sind, die von ihnen erfassten Daten nicht zeitgleich übermitteln können, wodurch die bolzenbezogene sequentielle Datenübertragung gewährleistet ist.

Gemäß einer alternativen Variante der vorliegenden Erfindung erstreckt sich die zumindest eine ortsfeste Antenne im Wesentlichen ringförmig in einem gleich bleibenden definierten Abstand zu den mitdrehenden Antennen. Bei dieser Variante werden die von den FOFW-Sensoren erfassten Betriebsdaten nicht sequentiell sondern dauerhaft übermittelt.

Vorteilhaft ist eine datentechnisch mit der Abfrageeinheit verbundene Auswerteeinheit vorgesehen, die derart eingerichtet ist, dass sie basierend auf den von den mitdrehenden FOFW-Sensoren erfassten und an die Abfrageeinheit übermittelten Daten Berechnungen durchführt, deren Ergebnisse eine verbleibende Lebensdauer der Planetenradbolzen und/oder der Planetenräder und/oder des Planetenradträgers repräsentieren, wenn diese gegen ein statistisch abgesichertes Auslegungskollektiv angesetzt werden. So können beispielsweise temperaturkompensierte RFC (Rain Flow Count) und/oder LDD (Lastverweildauerkurve) Kollektive der Verzahnungen der Planetenräder und/oder der Lager erstellt werden, um nur ein Beispiel zu nennen.

Die Auswerteeinheit ist vorteilhaft derart eingerichtet, dass basierend auf den Ergebnissen Wartungszeitpunkte ermittelt werden. Auf diese Weise kann eine bedarfsgerechte Wartung erzielt werden. Insbesondere kann hier eine mittels der Arrheniusgleichung temperaturkompensierte LDD zur Wartungsintervallplanung der Ölwechsel verwendet werden.

Vorteilhaft weist das FOFW-System weitere FOFW-Sensoren mit zugeordneten mitdrehenden Antennen und ortsfesten Antennen auf, wobei die weiteren FOFW-Sensoren im Bereich von Lagern des Planetenradträgers und/oder der Sonnenradwelle angeordnet sind. Mit anderen Worten ist das FOFW-System dazu ausgelegt, Betriebsdaten weiterer Komponenten des Planetengetriebes zu erfassen.

Gemäß einer Ausgestaltung der vorliegenden Erfindung ist zumindest ein FOFW-Sensor als ein Drehmoment erfassender Referenzsensor vorgesehen, der insbesondere an der Sonnenradwelle angeordnet ist. Hiermit kann eine Lastaufteilung zwischen den Planetenrädern nicht nur differentiell, sondern auch absolut gegen den Referenzsensor ermittelt werden, was nun eine Aussage bezüglich der Tragreserve des Getriebes ermöglicht. Weiterhin sind so auch zeitliche Veränderungen im Tragverhalten im Sinne von transienten Effekten innerhalb der Getriebestufen erfassbar.

Zur Lösung der eingangs genannten Aufgabe schlägt die vorliegende Erfindung ferner vor, ein FOFW-System, insbesondere ein erfindungsgemäßes FOFW-System, und eine Auswerteeinheit zur Ermittlung einer verbleibenden Lebensdauer von Planetenradbolzen und/oder Planetenrädern und/oder eines Planetenradträgers eines Planetengetriebes zu verwenden.

Weitere Merkmale und Vorteile der vorliegenden Erfindung werden anhand der nachfolgenden Beschreibung von Ausführungsformen eines erfindungsgemäßen Planetengetriebes unter Bezugnahme auf die beiliegende Zeichnung deutlich. Darin ist
- FIG 1: eine schematische Schnittansicht eines Planetengetriebes gemäß einer ersten Ausführungsform der vorliegenden Erfindung, das mit einem FOFW-System versehen ist;
- FIG 2: eine vereinfachte perspektivische Darstellung eines mit Komponenten des FOFW-Systems versehenen Planetenradträgers einer ersten Planetenstufe des in Figur 1 dargestellten Planetengetriebes;
- FIG 3: eine schematische Ansicht des in Figur 2 dargestellten Planetenradträgers, die eine Verformung des Planetenradträgers und eines der an diesem gehaltenen Planetenräder während des Betriebs des Planetengetriebes zeigt;
- FIG 4: ein Diagramm, das von dem FOFW-System während einer einzelnen Umdrehung des Planetenradträgers erfasste Dehnungen von Planetenradbolzen zeigt, an denen die Planetenräder drehbar gehalten sind; und
- FIG 5: eine vereinfachte perspektivische Ansicht des in Figur 2 dargestellten Planetenradträgers gemäß einer alternativen Ausführungsform der vorliegenden Erfindung.

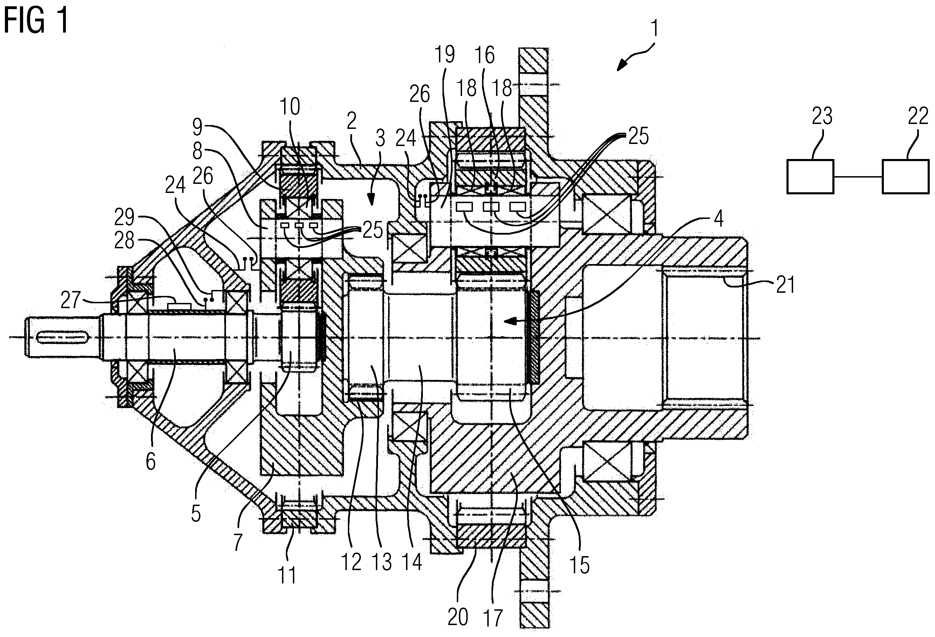

Figur 1 zeigt ein Planetengetriebe 1 gemäß einer Ausführungsform der vorliegenden Erfindung. Das Planetengetriebe 1 weist ein Gehäuse 2 auf, in dem eine erste Planetenstufe 3 und eine zweite Planetenstufe 4 angeordnet sind. Die erste Planetenstufe 3 umfasst ein Sonnenrad 5, das an einer drehbar am Gehäuse 2 gelagerten Sonnenradwelle 6 vorgesehen ist, einen drehbar an dem Gehäuse 2 gelagerten Planetenradträger 7 mit drei an diesem befestigten Planetenradbolzen 8, an denen jeweils ein Planetenrad 9 mittels eines Lagers 10 drehbar gehalten ist, und ein drehfest innerhalb des Gehäuses 2 befestigtes und eine Innenverzahnung aufweisendes Hohlrad 11, wobei das Sonnenrad 5 mit den Planetenrädern 9 kämmt, die wiederum mit dem Hohlrad 11 in Eingriff sind. Der Planetenradträger 7 ist mit einer Innenverzahnung 12 versehen, mit der ein erstes Stirnrad 13 kämmt, das an einer drehbar innerhalb des Gehäuses 2 angeordneten zweiten Sonnenradwelle 14 der zweiten Planetenstufe 4 vorgesehen ist. An der zweiten Sonnenradwelle 14 ist ferner ein zweites Sonnenrad 15 angeordnet, das mit Planetenrädern 16 eines zweiten Planetenradträgers 17 in Eingriff ist, die mittels Lagern 18 drehbar an zugeordneten Planetenradbolzen 19 gehalten sind. Die Planetenräder 16 kämmen mit einem drehfest innerhalb des Gehäuses 2 befestigten und eine Innenverzahnung aufweisenden zweiten Hohlrad 20. Ein freies Ende des zweiten Planetenradträgers 17 ist aus dem Gehäuse 2 hinausgeführt und mit einer Innenverzahnung 21 versehen, über welche die Drehbewegung des zweiten Planetenradträgers 17 an eine nicht näher dargestellte externe Komponente übertragen werden kann.

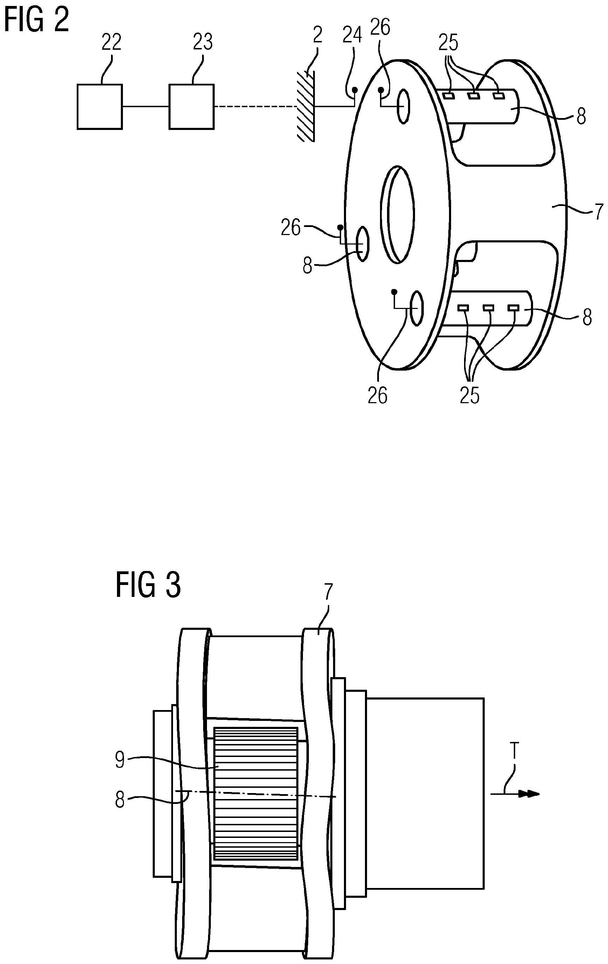

Das Planetengetriebe 1 ist mit einem FOFW-System ausgestattet, das eine Auswerteeinheit 22 und eine datentechnisch mit der Auswerteeinheit 22 verbundene Abfrageeinheit 23 umfasst. An die Abfrageeinheit 23 ist eine erste ortsfeste Antenne 24 angeschlossen, die innerhalb des Gehäuses 2 benachbart zum ersten Planetenradträger 7 angeordnet ist. Die Planetenradbolzen 8 des ersten Planetenradträgers 7 sind jeweils mit drei FOFW-Sensoren 25 versehen, die in am Außenumfang der Planetenradbolzen 8 vorgesehenen Aussparungen unterhalb der entsprechenden Lager 10 axial in Reihe positioniert sind und von den Lagern bedeckt werden. Die drei einem Planetenradbolzen 8 zugeordneten FOFW-Sensoren 25 sind jeweils an eine gemeinsame mitdrehende Antenne 24 angeschlossen, die in einem definierten axialen Abstand gegenüber der ortsfesten Antenne angeordnet sind, wie es schematisch in Figur 2 dargestellt ist. Die FOFW-Sensoren 25 weisen jeweils eine eigene und eindeutige Frequenzsignatur auf und sind derart ausgelegt, dass sie Dehnungen des zugeordneten Planetenradbolzen 8 sowie die Temperatur im Bereich der die Planetenräder 9 aufnehmenden Lager 10 erfassen. Analog zu den Planetenradbolzen 8 des ersten Planetenradträgers 7 sind auch die Planetenradbolzen 19 des zweiten Planetenradträgers 17 mit FOFW-Sensoren 25 versehen, die über mitdrehende Antennen 26 datentechnisch mit einer ortsfesten Antenne 24 kommunizieren, die an die Abfrageeinheit 23 angeschlossen ist. Ferner umfasst das FOFW-System einen ebenfalls als FOFW-Sensor ausgestalteten Referenzsensor 27, der an der Sonnenradwelle 6 angeordnet und mit einer an der Sonnenradwelle 6 gehaltenen mitdrehenden Antenne 28 verbunden ist, die mit einer weiteren ortsfesten Antenne 29 kommuniziert, die an die Abfrageeinheit 23 angeschlossen ist, wobei der Referenzsensor 27 ein auf die Sonnenradwelle 6 wirkendes Drehmoment erfasst, das als Referenz dient.

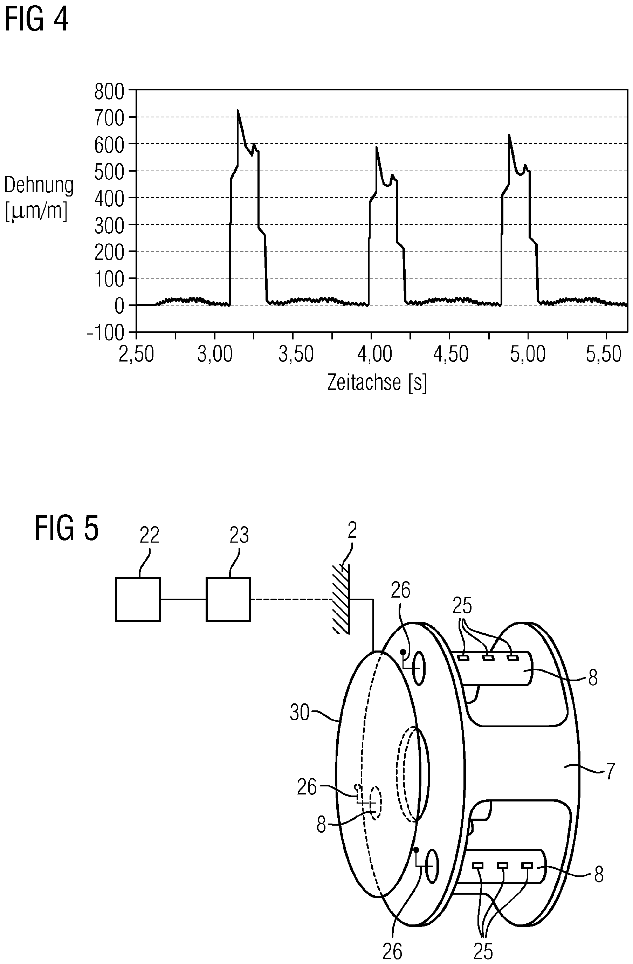

Während des Betriebs des Planetengetriebes 1 werden die mitdrehenden Antennen 26, 28 bei jeder Umdrehung jeweils einmal an der zugeordneten ortsfesten Antenne 24, 29 vorbeigeführt. Während eines Vorbeiführens kommen die FOFW-Sensoren 25, 27 in den Sende-/Empfangsbereich der ihr zugeordneten ortsfesten Antenne 24, 29 und werden abgefragt, woraufhin diese ihre Messwerte erfassen und an die Auswerteeinheit 22 übermitteln. Die an den Planetenradbolzen 8, 19 angeordneten FOFW-Sensoren 25 erfassen jeweils Messwerte, welche die Verformungen der einzelnen Planetenradbolzen 8, 19 repräsentieren, wie es in den Figuren 3 und 4 dargestellt ist. Figur 3 zeigt die Verformung eines einzelnen Planetenradbolzens 8 unter Last. Figur 4 zeigt die erfassten Verformungen der drei Planetenradbolzen 8 nach einer Umdrehung des ersten Planetenradträgers 7. Ferner liefern die FOFW-Sensoren 25 Messwerte, welche die aktuelle Temperatur im Bereich der Lager 10, 18 repräsentieren. Darüber hinaus werden basierend auf den zeitlichen Abständen und der Reihenfolge, mit denen die FOFW-Sensoren 25 aufeinander folgender Planetenradbolzen 8, 19 ihre Messwerte übermitteln, in der Auswerteeinheit 22 die aktuelle Drehzahl und der aktuellen Drehsinn der Planetenradträger 7, 17 berechnet. Basierend auf diesen Werten wird in der Auswerteeinheit 22 auf diese Weise insgesamt die Erstellung von drehzahlabhängigen und temperaturkompensierten RFC und insbesondere LDD Kollektiven von Lagern und Verzahnungen ermöglicht. Ferner lässt sich ein Soll-Ist-Vergleich der für die Lebensdauerauslegung der Komponenten verwendeten Datensätze (RFC, LDD, Lastspielgrenzen, Temperaturbelastung) zur Planung der Servicezeiten oder zur Schadensvorhersage verwenden.

Figur 5 zeigt beispielhaft eine alternative ringförmige Ausgestaltung einer ortsfesten Antenne 30. Bei dieser Variante können die einzelnen FOFW-Sensoren 25 dauerhaft abgefragt werden, da sie sich stets im Sende-/Empfangsbereich der ortsfesten Antenne 30 befinden.

Die Anzahl der an einem einzelnen Planetenradbolzen angeordneten FOFW-Sensoren, die Anzahl ortsfester und/oder mitdrehender Antennen oder dergleichen kann variieren.

## Patentansprüche

1. Planetengetriebe (1) mit einem Gehäuse (2) und zumindest einer Planetenstufe (3), die zumindest ein Sonnenrad (5), das an einer drehbar am Gehäuse (2) gelagerten Sonnenradwelle (6) vorgesehen ist, zumindest einen drehbar an dem Gehäuse (2) gelagerten Planetenradträger (7), zumindest zwei an dem Planetenradträger (7) befestigte Planetenradbolzen (8), an denen jeweils ein Planetenrad (9) drehbar gehalten ist, und zumindest ein drehfest innerhalb des Gehäuses (2) befestigtes und eine Innenverzahnung aufweisendes Hohlrad (11) umfasst, mit dem die Planetenräder (9) in Eingriff sind, und **dadurch gekennzeichnet, dass** ein FOFW-System vorgesehen ist, das eine Abfrageeinheit (23), zumindest eine elektrisch mit der Abfrageeinheit (23) verbundene und innerhalb des Gehäuses (2) angeordnete ortsfeste Antenne (24; 30), zumindest zwei an den Planetenradbolzen (8) befestigte FOFW-Sensoren (25) und zumindest eine der Anzahl von Planetenradbolzen (8) entsprechende Anzahl von an dem Planetenradträger (7) befestigten mitdrehenden Antennen (26) aufweist, die jeweils mit zumindest einem der FOFW-Sensoren (25) elektrisch verbunden und derart angeordnet und ausgebildet sind, dass sie von den FOFW-Sensoren (25) erfasste Messdaten an die zumindest eine ortsfeste Antenne (24; 30) übertragen, und die FOFW-Sensoren (25) jeweils zwischen Wangen des Planetenradträgers (7) an den Planetenradbolzen (8) befestigt sind.

2. Planetengetriebe (1) nach Anspruch 1,
**dadurch gekennzeichnet, dass** das FOFW-Systems derart ausgelegt und die FOFW-Sensoren (25) derart an den zugeordneten Planetenradbolzen (8) angeordnet sind, dass während des bestimmungsgemäßen Betriebs des Planetengetriebes (1) zumindest eine auf den zugeordneten Planetenradbolzen (8) einwirkende Kraftkomponente und/oder eine im Bereich des FOFW-Sensors (25) hervorgerufene Dehnung des Planetenradbolzens (8) und/oder eine im Bereich des FOFW-Sensors (25) vorherrschende Temperatur und/oder eine Biegung des Planetenradbolzens (8) im Bereich des FOFW-Sensors (25) und/oder eine Drehzahl des Planetenradträgers (7) erfasst wird/werden.

3. Planetengetriebe (1) nach einem der vorhergehenden Ansprüche,
**dadurch gekennzeichnet, dass** die FOFW-Sensoren (25) innerhalb einer an dem Planetenradbolzen (8) vorgesehen Aussparung positioniert sind und von einem an dem Planetenradbolzen (8) vorgesehenen Lager (10) bedeckt werden, welches das Planetenrad (9) aufnimmt.

4. Planetengetriebe (1) nach einem der vorhergehenden Ansprüche,
dass entlang der Längserstreckung jedes Planetenradbolzens (8) mehrere FOFW-Sensoren (25) befestigt sind, die bevorzugt mit einer gemeinsamen mitdrehenden Antenne (28) elektrisch verbunden sind.

5. Planetengetriebe (1) nach einem der vorhergehenden Ansprüche,
**dadurch gekennzeichnet, dass** die von den einzelnen FOFW-Sensoren (25) ausgesendeten Signale jeweils eine eindeutige Frequenzsignatur aufweisen.

6. Planetengetriebe (1) nach einem der vorhergehenden Ansprüche,
**dadurch gekennzeichnet, dass** die zumindest eine ortsfeste Antenne (24) derart ausgebildet und angeordnet ist, dass die mitdrehenden Antennen (26) während einer Drehbewegung des Planetenradträgers (7) nacheinander in und aus dem Empfangsbereich der zumindest einen ortsfesten Antenne (24) bewegt werden.

7. Planetengetriebe (1) nach Anspruch 6,
**dadurch gekennzeichnet, dass** der Sende- und Empfangsbereich der ortsfesten und mitdrehenden Antennen (24, 28) geringer ist als der kürzeste Abstand zwischen den mitdrehenden Antennen (28).

8. Planetengetriebe (1) nach einem der Ansprüche 1 bis 5, **dadurch gekennzeichnet, dass** sich die zumindest eine ortsfeste Antenne (30) im Wesentlichen ringförmig in einem gleich bleibenden definierten Abstand zu den mitdrehenden Antennen (28) erstreckt.

9. Planetengetriebe (1) nach einem der vorhergehenden Ansprüche,
**dadurch gekennzeichnet, dass** eine datentechnisch mit der Abfrageeinheit (23) verbundene Auswerteeinheit (22) vorgesehen ist, die derart eingerichtet ist, dass sie basierend auf den von den mitdrehenden FOFW-Sensoren (25) erfassten und an die Abfrageeinheit (23) übermittelten Daten Berechnungen durchführt, deren Ergebnisse eine verbleibende Lebensdauer der Planetenradbolzen (8) und/oder der Planetenräder (9) und/oder des Planetenradträgers (7) repräsentieren.

10. Planetengetriebe (1) nach Anspruch 9,
**dadurch gekennzeichnet, dass** die Auswerteeinheit (23) derart eingerichtet ist, dass basierend auf den Ergebnissen Wartungszeitpunkte ermittelt werden.

11. Planetengetriebe (1) nach einem der vorhergehenden Ansprüche,
**dadurch gekennzeichnet, dass** das FOFW-System weitere FOFW-Sensoren mit zugeordneten mitdrehenden Antennen und ortsfesten Antennen aufweist, wobei die weiteren FOFW-Sensoren im Bereich von Lagern des Planetenradträgers und/oder der Sonnenradwelle angeordnet sind.

12. Planetengetriebe (1) nach einem der vorhergehenden Ansprüche,
**dadurch gekennzeichnet, dass** zumindest ein FOFW-Sensor als ein ein Drehmoment erfassender Referenzsensor (27) vorgesehen ist, der insbesondere an der Sonnenradwelle (6) angeordnet ist.

13. Verwendung eines FOFW-Systems und einer Auswerteeinheit zur Ermittlung einer verbleibenden Lebensdauer von Planetenradbolzen (8, 19) und/oder Planetenrädern (9, 16) und/oder eines Planetenradträgers (7, 17) eines Planetengetriebes (1) nach einem der Ansprüche 1 bis 12.

## Claims

1. Planetary transmission (1) having a housing (2) and at least one planetary stage (3), which comprises at least one sun gear (5) which is provided on a sun gear shaft (6) that is rotatably mounted on the housing (2), at least one planet gear carrier (7) that is rotatably mounted on the housing (2), at least two planet gear pins (8) which are fastened to the planet gear carrier (7) and on each of which a planet gear (9) is rotatably held, and at least one ring gear (11) fastened non-rotationally within the housing (2) and having an internal toothing and with which the planet gears (9) are in engagement, and **characterised in that** an FOFW system is provided which comprises an interrogation unit (23), at least one locally fixed antenna (24; 30) electrically connected to the interrogation unit (23) and arranged within the housing (2), at least two FOFW sensors (25) fastened to the planet gear pins (8) and at least a number of co-rotating antennae (26) fastened to the planet gear carrier (7) corresponding to the number of planet gear pins (8), said antennae each being electrically connected to at least one of the FOFW sensors (25) and arranged and configured such that they transfer measurement data acquired by the FOFW sensors (25) to the at least one locally fixed antenna (24; 30), and the FOFW sensors (25) are in each case fastened between side walls of the planet gear carrier (7) on the planetary gear pins (8).

2. Planetary transmission (1) according to claim 1, **characterised in that** the FOFW system is configured and the FOFW sensors (25) are arranged on the associated planet gear pins (8) such that during the intended operation of the planetary transmission (1), at least one force component acting upon the associated planet gear pin (8) and/or a stretching of the planet gear pin (8) caused in the region of the FOFW sensor (25) and/or a temperature prevailing in the region of the FOFW sensor (25) and/or a bending of the planet gear pin (8) in the region of the FOFW sensor (25) and/or a rotary speed of the planet gear carrier (7) is/are detected.

3. Planetary transmission (1) according to one of the preceding claims,
**characterised in that** the FOFW sensors (25) are positioned within a recess provided on the planet gear pin (8) and are covered by a bearing (10) which is provided on the planet gear pin (8) and which receives the planet gear (9).

4. Planetary transmission (1) according to one of the preceding claims,
**characterised in that**, fastened along the longitudinal extent of each planet gear pin (8) is a plurality of FOFW sensors (25) which are preferably electrically connected to a jointly co-rotating antenna (28).

5. Planetary transmission (1) according to one of the preceding claims,
**characterised in that** the signals emitted by the individual FOFW sensors (25) each have a unique frequency signature.

6. Planetary transmission (1) according to one of the preceding claims,
**characterised in that** the at least one locally fixed antenna (24) is configured and arranged such that the co-rotating antennae (26) are moved sequentially in and out of the receiving range of the at least one locally fixed antenna (24) during a rotation movement of the planet gear carrier (7).

7. Planetary transmission (1) according to claim 6,
**characterised in that** the transmitting and receiving range of the locally fixed and co-rotating antennae (24, 28) is less than the shortest spacing between the co-rotating antennae (28) .

8. Planetary transmission (1) according to one of claims 1 to 5,
**characterised in that** the at least one locally fixed antenna (30) extends in substantially an annular form at a constant defined spacing from the co-rotating antennae (28).

9. Planetary transmission (1) according to one of the preceding claims,
**characterised in that**, an evaluation unit (22) linked by means of data technology to the interrogation unit (23) is provided and is arranged such that it carries out calculations on the basis of the data that has been acquired by the co-rotating FOFW sensors (25) and transferred to the interrogation unit (23), the results of said calculations representing a remaining service life of the planet gear pins (8) and/or of the planet gears (9) and/or of the planet gear carrier (7).

10. Planetary transmission (1) according to claim 9,
**characterised in that** the evaluation unit (23) is configured such that on the basis of the results, maintenance time points are determined.

11. Planetary transmission (1) according to one of the preceding claims,
**characterised in that** the FOFW system has further FOFW sensors with associated co-rotating antennae and locally fixed antennae, wherein the further FOFW sensors are arranged in the region of bearings of the planet gear carrier and/or the sun gear shaft.

12. Planetary transmission (1) according to one of the preceding claims,
**characterised in that** at least one FOFW sensor is provided as a torque-sensing reference sensor (27) which is arranged, in particular, on the sun gear shaft (6).

13. Use of an FOFW system and an evaluation unit for determining a remaining service life of planet gear pins (8, 19) and/or planet gears (9, 16) and/or a planet gear carrier (7, 17) of a planetary transmission (1) according to one of claims 1 to 12.

## Revendications

1. Train (1) épicycloïdal, comprenant un carter (2) et au moins un étage (3) satellite, qui comprend au moins une roue (5) solaire prévue sur un arbre (6) de roue solaire monté tournant sur le carter (2), au moins un support (7) de roue satellite monté tournant sur le carter (2), au moins deux axes (8) de roue satellite, qui sont fixées au support (7) de roue satellite et sur lesquels est retenue tournante, respectivement, une roue (9) satellite et au moins une roue (11) à denture intérieure, qui est fixée en étant solidaire en rotation à l'intérieur du carter (2), qui a une denture intérieure et avec laquelle les roues (9) satellites engrènent et **caractérisé en ce qu'**il est prévu un système FOFW, qui a une unité (23) d'interrogation, au moins une antenne (24, 30) à poste fixe reliée électriquement à l'unité (23) d'interrogation et disposée à l'intérieur du carter (2), au moins deux capteurs (25) FOFW fixés aux axes (8) des roues satellites et au moins un nombre, correspondant au nombre d'axes (8) de roue satellite, d'antennes (26) tournantes fixées au support (7) de roue satellite, qui sont reliées électriquement à au moins l'un des capteurs (25) FOFW et qui sont disposées et constituées de manière à transmettre des données de mesure relevées par les capteurs (25) FOFW à la au moins une antenne (24 ; 30) à poste fixe et les capteurs (25) FOFW sont fixés chacun entre des joues du support (7) de roue satellite aux axes (8) de roue satellite.

2. Train (1) épicycloïdal suivant la revendication 1, **caractérisé en ce que** le système FOFW est conçu et les capteurs (25) FOFW sont disposés sur les axes (8) de roue satellite associés, de manière à relever, pendant le fonctionnement conforme aux prescriptions du train (1) épicycloïdal, au moins une composante de force s'appliquant à l'axe (8) de roue satellite associé et/ou une dilatation, provoquée dans la partie du capteur (25) FOFW, de l'axe (8) de roue satellite et/ou une température régnant dans la partie du capteur (25) FOFW et/ou une flexion de l'axe (8) de roue satellite dans la région du capteur (25) FOFW et/ou une vitesse de rotation du support (7) de roue satellite.

3. Train (1) épicycloïdal suivant l'une des revendications précédentes,
**caractérisé en ce que** les capteurs (25) FOFW sont placés à l'intérieur d'un évidement prévu sur l'axe (8) de roue satellite et sont recouverts d'un palier (10), qui est prévu sur l'axe (8) de roue satellite et qui reçoit la roue (9) satellite.

4. Train (1) épicycloïdal suivant l'une des revendications précédentes,
dans lequel, suivant l'étendue en longueur de chaque axe (8) de roue satellite, sont fixés plusieurs capteurs (25) FOFW, qui, de préférence, sont reliés électriquement à une antenne (28) tournante commune.

5. Train (1) épicycloïdal suivant l'une des revendications précédentes,
**caractérisé en ce que** les signaux émis par les divers capteurs (25) FOFW ont chacun une signature de fréquence univoque.

6. Train (1) épicycloïdal suivant l'une des revendications précédentes,
**caractérisé en ce que** la au moins une antenne (24) à poste fixe est constituée et disposée de manière à déplacer les antennes (26) tournantes pendant un mouvement de rotation du support (7) de roue satellite, l'une après l'autre, dans et hors de la zone de réception de la au moins une antenne (24) à poste fixe.

7. Train (1) épicycloïdal suivant la revendication 6, **caractérisé en ce que** la zone d'émission et de réception des antennes (24, 28) fixes et tournantes est plus petite que la distance la plus courte entre les antennes (28) tournantes.

8. Train (1) épicycloïdal suivant l'une des revendications 1 à 5,
**caractérisé en ce que** la au moins une antenne (30) à poste fixe s'étend d'une manière sensiblement annulaire à une distance définie en restant constante des antennes (28) tournantes.

9. Train (1) épicycloïdal suivant l'une des revendications précédentes,
**caractérisé en ce qu'**il est prévu une unité (22) d'exploitation, qui est reliée en technique de données à l'unité (23) d'interrogation et qui est conçue de manière à effectuer, sur la base des données relevées par les capteurs (25) FOFW tournants et transmis à l'unité (23) d'interrogation, des calculs, dont les résultats représentent une durée de vie restante des axes (8) de roue satellite et/ou des roues (9) satellites et/ou du support (7) de roue satellite.

10. Train (1) épicycloïdal suivant la revendication 9, **caractérisé en ce que** l'unité (23) d'exploitation est conçue de manière à déterminer des instants d'entretien sur la base des résultats.

11. Train (1) épicycloïdal suivant l'une des revendications précédentes,
**caractérisé en ce que** le système FOFW a d'autres capteurs FOFW ayant des antennes tournantes et des antennes fixes associées, les autres capteurs FOFW étant disposés dans la région de paliers du support de roue satellite et/ou de l'arbre de la roue solaire.

12. Train (1) épicycloïdal suivant l'une des revendications précédentes,
**caractérisé en ce qu'**il est prévu au moins un capteur FOFW sous la forme d'un capteur (27) de référence détectant un couple, notamment monté sur l'arbre (6) de la roue solaire.

13. Utilisation d'un système FOFW et d'une unité d'exploitation pour déterminer une durée de vie restante d'axes (8, 19) de roue satellite et/ou de roues (9, 16) satellite et/ou d'un support (7, 17) de roue satellite d'un train (1) épicycloïdal suivant l'une des revendications 1 à 12.
